# EUROPÄISCHE PATENTSCHRIFT

(11) **EP 3 662 173 B1**
(45) Veröffentlichungstag und Bekanntmachung des Hinweises auf die Patenterteilung: **12.05.2021**
(21) Anmeldenummer: 18759043.5
(22) Anmeldetag: 02.08.2018
(51) Int. Cl.: F16D 65/12, F16B 19/06

(54) **BREMSSCHEIBE UND VERFAHREN ZUR HERSTELLUNG EINER BREMSSCHEIBE**
BRAKE DISC AND METHOD FOR PRODUCING A BRAKE DISC
DISQUE DE FREIN ET PROCÉDÉ DE FABRICATION D'UN DISQUE DE FREIN

(30) Priorität: 02.08.2017 DE 102017213372; 01.08.2018 DE 102018212862
(43) Veröffentlichungstag der Anmeldung: 10.06.2020
(73) Patentinhaber: Robert Bosch GmbH, 70442 Stuttgart (DE)
(72) Erfinder: BOZOVIC, Ilija, Sopot Djurinci 11450 (RS); RAAB, Roland, 69168 Wiesloch (DE); LE BARZIC, Laurent, 67000 Strasbourg (FR)
(86) Internationale Anmeldenummer: PCT/EP2018/070972
(87) Internationale Veröffentlichungsnummer: WO 2019/025529

(56) Entgegenhaltungen:
- DE-A1- 10 032 972
- DE-A1-102008 018 326
- DE-A1-102015 226 450
- GB-A- 1 068 287

## Beschreibung

Die vorliegende Erfindung betrifft eine Bremsscheibe bzw. ein Verfahren zur Herstellung einer Bremsscheibe mit den Merkmalen der unabhängig formulierten Ansprüche.

Bremsscheiben haben die Aufgabe, das Bremsmoment bei einer Verzögerung des Fahrzeugs auf die Achse zu übertragen sowie die bei der Bremsung auftretende kinetische Energie kurzzeitig in Form von Wärme zwischenzuspeichern und nachfolgend über Leitung, Strahlung und Konvektion wieder abzugeben.

Bremsscheiben werden im Stand der Technik üblicherweise einteilig aus Gusseisen mit Lamellengraphit erzeugt.

Im Rahmen des Leichtbau werden Bremsscheiben, insbesondere im Bereich des Bremstopfes, durch andere, in der Regel leichtere Materialien als Grauguss ersetzt. Beispielhaft ist hier ein Blechtopf zu nennen. Ebenfalls kann der Bremstopf durch einen Aluminiumtopf ersetzt werden. Beispielhaft ist hierzu die DE 100 32 972 B4 zu nennen. Hier ist eine Verbund-Bremsscheibe für eine Fahrzeug beschrieben, die einen aus Gusswerkstoff ausgeführten Reibring aufweist, der an einem aus einem anderen Werkstoff bestehenden Bremsscheibentopf befestigt ist. Der Reibring wird nun mit dem Bremstopf mittels einer Fügestelle zwischen Reibring und Bremsscheibentopf durch Verbindungselemente verbunden. Hier liegt der Nietkopf nur teilweise an dem Bremstopf an und zwar nur in der DE 100 32 972 B4 gezeigten Ebene der Schnitte durch den Nietkopf. Da sowohl der Bremstopf als auch der Reibring im Bereich der Nietkopf gewölbt ausgestaltet ist, kann der Nietkopf in der DE 100 32 972 B4 nicht mit seiner Gesamtfläche an dem Bremstopf anliegen.

### Offenbarung der Erfindung

Die Erfindung geht aus von einer Bremsscheibe mit
- einem wenigstens zum Teil aus einem ersten Material bestehenden Reibring,
- einem wenigstens zum Teil aus einem vom ersten Material unterschiedlichen zweiten Material bestehenden Bremstopf, wobei
- der Reibring einen in axial Richtung ausgebildeten Bund aufweist, und
- der Bund mit einem axial zum Reibring hin gerichteten Rand des Bremstopfs mittels wenigstens eines als Niet ausgebildeten Verbindungselements verbunden ist.

Der Kern der Erfindung besteht darin, dass der Nietkopf derart verformt ist, dass er an der vom Bund abgewandten gebogene, gekrümmte und/oder kreisbogenförmige Oberfläche des Bremstopfs flächig anliegt.

Um eine stabile mechanische Verbindung zwischen dem Bund des Reibrings und dem Bremstopfs zu realisieren, ist eine gute mechanische Verbindung zwischen dem Verbindungselement und dem Bremstopf und/oder Bund notwendig. Dies könnte beispielsweise durch Ausnehmungen im Bereich der Verbindungselements erreicht werden. Das Material eines Bremstopfs in Leichtbauweise hat aber in der Regel nur eine Dicke von ca. 2,5 mm bis 2,8 mm. Aus diesem Grund würde eine Ausnehmung im Bereich eines Verbindungselements zu einer weiteren Reduktion des ohnehin bereits sehr dünnen Materials führen. Die Erfindung löst dieses Problem, indem der Nietkopf an der vom Bund abgewandten Oberfläche des Bremstopfs bzw. des Randes des Bremstopfs flächig anliegt. Damit kommt es zu einer sehr stabilen mechanische Verbindung zwischen dem Bund des Reibrings und dem Bremstopf.

Besonders vorteilhaft ist es, dass der Bremstopf wenigstens zum Teil aus Leichtmetall, insbesondere Aluminium, besteht. Ebenso kann der Bremstopf wenigstens zum Teil aus Metall, insbesondere Blech, besteht.

Der Reibring kann aus Grauguss bestehen.

In einer vorteilhaften Ausgestaltung der Erfindung ist vorgesehen, dass der Bund an dem Reibring angeformt ausgebildet ist.

Die Erfindung betrifft insbesondere auch ein Verfahren zur Herstellung der erfindungsgemäßen Bremsscheibe. Dabei geht auch das erfindungsgemäße Verfahren aus von:
- einem wenigstens zum Teil aus einem ersten Material bestehenden Reibring, der einen in axial Richtung ausgebildeten Bund aufweist, und
- einem wenigstens zum Teil aus einem vom ersten Material unterschiedlichen zweiten Material bestehenden Bremstopf.

Erfindungsgemäß sind folgende Schritte vorgesehen:
- Bereitstellen des wenigstens einen Reibrings,
- Bereitstellen des Bremstopfs,
- Verbinden des Bunds mit einem axial zum Reibring hin gerichteten Rand des Bremstopfs mittels wenigstens eines als Niet ausgebildeten Verbindungselements, wobei das Verbinden derart geschieht, dass der Nietkopf an seinem Rand wenigstens zeitweise einer größeren und im Wesentlichen senkrecht zum Niet wirkenden Kraft als in seinem Zentrum ausgesetzt wird, so dass der Nietkopf derart verformt wird, dass er an der vom Bund abgewandten gebogene, gekrümmte und/oder kreisbogenförmige Oberfläche des Bremstopfs flächig anliegt.

Durch die erfindungsgemäß verteilte Kraft auf den Nietkopf kommt es zu einer Verformung derart, dass der Nietkopf an der vom Bund abgewandten Oberfläche des Bremstopfs im Wesentlichen flächig anliegt.

Besonders vorteilhaft ist es, dass das Verbinden mittels eines Werkzeugs mit einer gerundeten Fläche geschieht, wobei die gerundete Fläche mit dem Nietkopf derart in Kontakt gebracht wird, dass der Nietkopf an seinen Rand einer größeren und im Wesentlichen senkrecht wirkenden Kraft als in seinem Zentrum ausgesetzt wird.

Weitere vorteilhafte Ausgestaltungen der Erfindung sind den Unteransprüchen und dem Ausführungsbeispiel zu entnehmen.

### Zeichnungen

Nachfolgend werden Ausführungsbeispiele der Erfindung anhand von Zeichnungen erläutert.
Die Figur 1 zeigt eine fertig montierte Bremsscheibe in Leichtbauweise gemäß der Erfindung.
Die Figur 2 zeigt eine Bremsscheibe in Leichtbauweise vor der Montage gemäß der Erfindung.
Die Figur 3 zeigt eine fertig montierte Bremsscheibe in Leichtbauweise gemäß der Erfindung als Schnittbild.
Die Figur 4 zeigt das erfindungsgemäße Herstellungsverfahren.

### Beschreibung von Ausführungsbeispielen

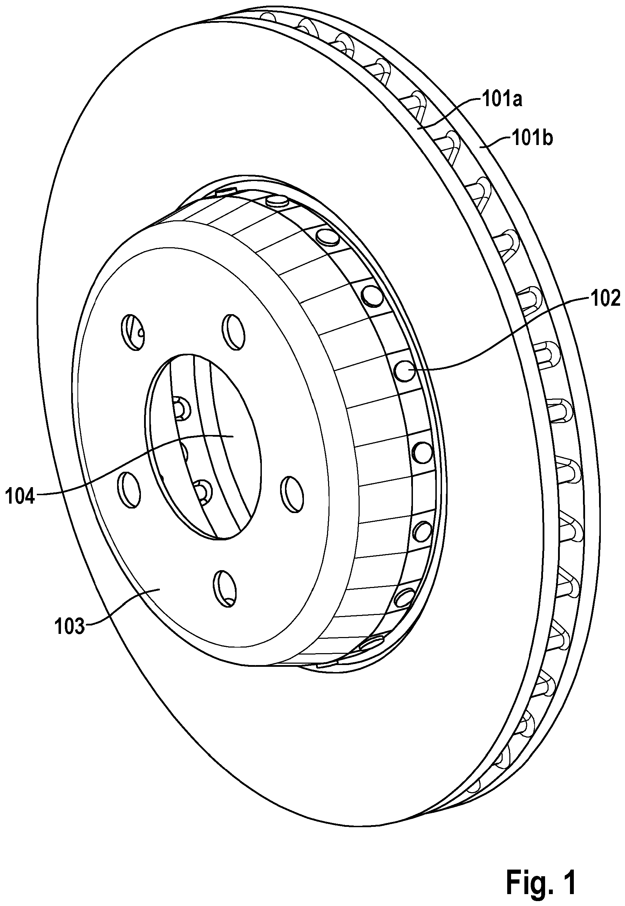

Die in Figur 1 dargestellte Bremsscheibe weist zwei kreisringscheibenförmigen Bremsringe 101a und 101b auf, die mit Distanzelementen verbunden sind. Die dargestellte Bremsscheibe ist innenbelüftet, ihr Bremsring ist doppelwandig. Äußere Stirnflächen des Bremsrings bilden kreisringscheibenförmige Reibflächen 101a und 101b der Bremsscheibe. Die Reibflächen sind die Oberflächen der Bremsscheibe, gegen die beim Bremsen nicht dargestellte Reibbremsbeläge gedrückt werden, um die Bremsscheibe durch Reibung zu bremsen. Die Bremsscheibe besteht in diesem Ausführungsbeispiel aus Grauguss oder einer Stahllegierung. Die Bremsscheibe weist mittig eine Ausnehmung 104 auf.

Mit dem Bezugszeichen 103 ist der Bremstopf gekennzeichnet, der mittels der Verbindungselemente 102 mit der Bremsscheibe verbunden ist.

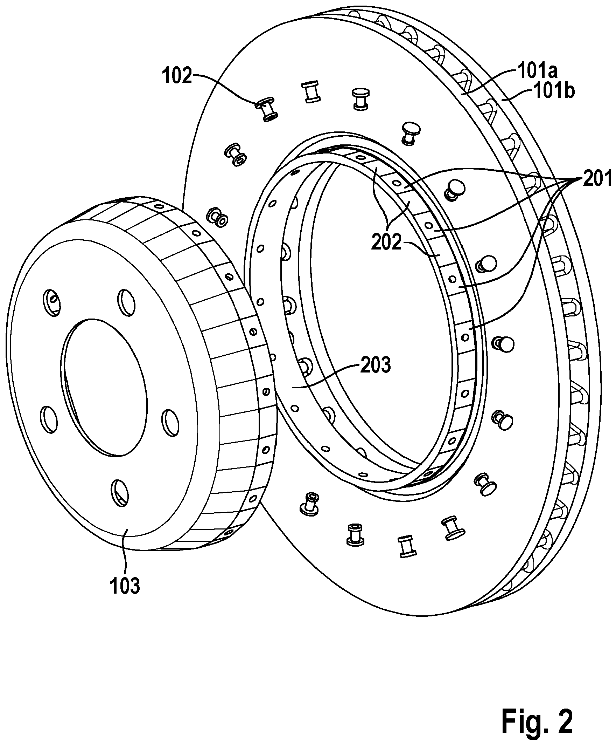

Die Figur 2 zeigt die in der Figur 1 dargestellte Bremsscheibe vor der Verbindung des Bremstopfs 103 mit der Bremsscheibe 101a/b.

Axialsymmetrisch an der Bremsscheibe 101a/b angebracht ist ein Bund 203 mit den Außenflächen 201 und 202. Die Verbindungselemente 102 sind über ihren zugehörigen Löchern in dem Bund 201 und 202 dargestellt. Zur Verbindung zwischen Bremstopf 103 und Bremsscheibe 101a/b werden im äußeren Rand des Bremstopfs 103 vorgesehen Löcher mit den erwähnten Löcher im Bund in Überdeckung gebracht. Danach können die hier als Nieten 201 vorgesehenen Verbindungsmittel angebracht werden.

Sowohl der Bund als auch der äußere Rand des Bremstopfs 103 weisen dabei gebogene, gekrümmte und/oder kreisbogenförmige Flächen 201 und 202 auf. Diese gebogenen, gekrümmten und/oder kreisbogenförmigen Flächen 201 und 202 folgen im Wesentlichen der durch die runde Ausnehmung 104 vorgegebenen Form.

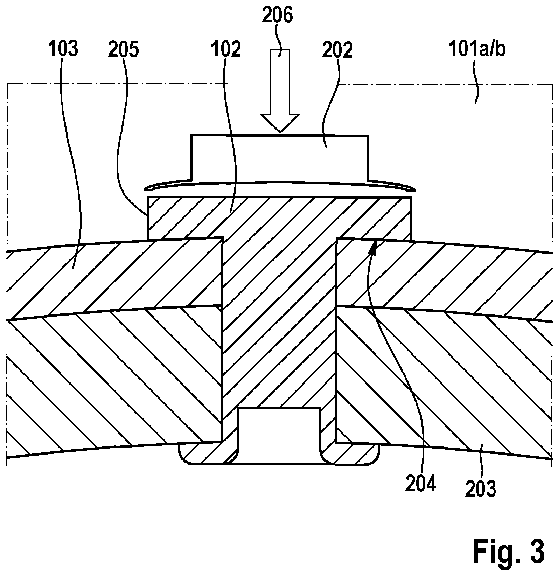

Die Figur 3 zeigt eine fertig montierte Bremsscheibe in Leichtbauweise gemäß der Erfindung als Schnitt (Draufsicht auf die Reibfläche des Reibrings). Man erkennt, dass der Niet 102, genauer gesagt der Nietkopf durch das Werkzeug 202 mit der gebogenen Kontaktfläche zum Nietkopf hin derart bearbeitet wird, dass der Nietkopf 205 an der vom Bund 203 abgewandten Oberfläche 204 des Bremstopf 103 flächig anliegt. Dies wird erzielt, in dem durch das Werkzeug 202 der Nietkopf 205 an seinen Rand einer höheren Kraft 206 als in seinem Zentrum ausgesetzt wird.

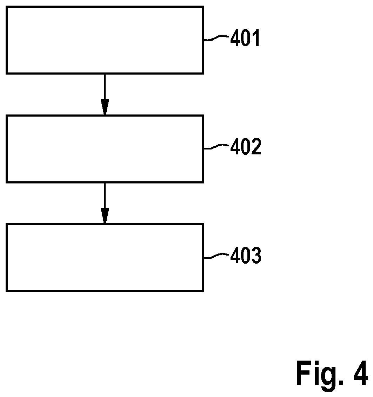

Anhand der Figur 4 soll nun das Verfahren zur Herstellung der erfindungsgemäßen Bremsscheibe erläutert werden.
- Im Schritt 401 wird wenigstens ein Reibrings 101a/b bereitgestellt.
- Im Schritt 402 wird der Bremstopf 103 bereitgestellt.
- Im Schritt 403 wird der Bunds 201, 202 mit einem zum Reibring 101a/b hin gerichteten Rand des Bremstopfs 103 mittels wenigstens eines als Niet ausgebildeten Verbindungselements 102 verbunden. Das Verbinden geschieht dabei derart, dass der Nietkopf 205 an seinen Rand einer höheren Kraft 206 als in seinem Zentrum ausgesetzt wird.

## Patentansprüche

1. Bremsscheibe mit
• einem wenigstens zum Teil aus einem ersten Material bestehenden Reibring (101a, 101b), und
• einem wenigstens zum Teil aus einem vom ersten Material unterschiedlichen zweiten Material bestehenden Bremstopf (103), wobei
• der Reibring (101a, 101b) einen in axiale Richtung ausgebildeten Bund (201, 202) aufweist, und
• der Bund (201, 202) mit einem axial zum Reibring (101a, 101b) hin gerichteten Rand des Bremstopfs (103) mittels wenigstens eines als Niet ausgebildeten Verbindungselements (102) verbunden ist,
**dadurch gekennzeichnet, dass**
• der über ein im Bund (201, 202) und im Rand vorgesehenes Loch durchgeführte Nietkopf (205) derart verformt ist, dass er an der vom Bund abgewandten gebogene, gekrümmte und/oder kreisbogenförmige Oberfläche (203) des Bremstopfs (103) flächig anliegt.

2. Bremsscheibe nach Anspruch 1, **dadurch gekennzeichnet, dass** der Bremstopf (103) wenigstens zum Teil aus Leichtmetall, insbesondere Aluminium, besteht.

3. Bremsscheibe nach Anspruch 1, **dadurch gekennzeichnet, dass** der Bremstopf (103) wenigstens zum Teil aus Metall, insbesondere Blech, besteht.

4. Bremsscheibe nach Anspruch 1, **dadurch gekennzeichnet, dass** der Reibring (101a, 101b) aus Grauguss besteht.

5. Bremsscheibe nach Anspruch 1, **dadurch gekennzeichnet, dass** der Bund (201, 202) an dem Reibring (101a, 101b) angeformt ausgebildet ist.

6. Verfahren zur Herstellung einer Bremsscheibe mit
• einem wenigstens zum Teil aus einem ersten Material bestehenden Reibring (101a, 101b), der einen in axial Richtung ausgebildeten Bund (201, 202) aufweist, und
• einem wenigstens zum Teil aus einem vom ersten Material unterschiedlichen zweiten Material bestehenden Bremstopf (103),
mit folgenden Schritten:
• Bereitstellen (401) des wenigstens einen Reibrings (101a, 101b),
• Bereitstellen (402) des Bremstopfs (103),
• Verbinden (403) des Bunds (201, 202) mit einem axial zum Reibring (101a, 101b) hin gerichteten Rand des Bremstopfs (103) mittels wenigstens eines als Niet ausgebildeten Verbindungselements (102),
**dadurch gekennzeichnet, dass**
das Verbinden derart geschieht, dass der Nietkopf (205) wenigstens zeitweise an seinem Rand einer größeren und im Wesentlichen senkrecht wirkenden Kraft (206) als in seinem Zentrum ausgesetzt wird, so dass der über ein im Bund (201, 202) und im Rand vorgesehenes Loch durchgeführte Nietkopf (205) derart verformt wird, dass er an der vom Bund abgewandten gebogene, gekrümmte und/oder kreisbogenförmige Oberfläche (203) des Bremstopfs (103) flächig anliegt.

7. Verfahren nach Anspruch 6, **dadurch gekennzeichnet, dass** das Verbinden (403) mittels eines Werkzeugs (202) mit einer gerundeten Fläche geschieht, wobei die gerundete Fläche mit dem Nietkopf in Kontakt gebracht wird.

8. Verfahren nach Anspruch 6, **dadurch gekennzeichnet, dass** der Bremstopf (103) wenigstens zum Teil aus Leichtmetall, insbesondere Aluminium, besteht.

9. Verfahren nach Anspruch 6, **dadurch gekennzeichnet, dass** der Bremstopf (103) wenigstens zum Teil aus Metall, insbesondere Blech, besteht.

10. Verfahren nach Anspruch 6, **dadurch gekennzeichnet, dass** der Reibring (101a, 101b) aus Grauguss besteht.

## Claims

1. Brake disc with
• a friction ring (101a, 101b) which consists at least in part of a first material, and
• a brake pot (103) which consists at least in part of a second material which is different from the first material,
• the friction ring (101a, 101b) having a collar (201, 202) which is configured in the axial direction, and
• the collar (201, 202) being connected by means of at least one connecting element (102) which is configured as a rivet to an edge of the brake pot (103), which edge is directed axially towards the friction ring (101a, 101b),
**characterized in that**
• the rivet head (205) which is guided through via a hole which is provided in the collar (201, 202) and in the edge is deformed in such a way that it bears flatly against the bent, curved and/or arcuate surface (203) of the brake pot (103), which surface (203) faces away from the collar.

2. Brake disc according to Claim 1, **characterized in that** the brake pot (103) consists at least in part of light metal, in particular aluminium.

3. Brake disc according to Claim 1, **characterized in that** the brake pot (103) consists at least in part of metal, in particular sheet metal.

4. Brake disc according to Claim 1, **characterized in that** the friction ring (101a, 101b) consists of grey cast iron.

5. Brake disc according to Claim 1, **characterized in that** the collar (201, 202) is configured such that it is integrally formed on the friction ring (101a, 101b).

6. Method for producing a brake disc with
• a friction ring (101a, 101b) which consists at least in part of a first material and has a collar (201, 202) which is configured in the axial direction, and
• a brake pot (103) which consists at least in part of a second material which is different from the first material,
with the following steps:
• providing (401) the at least one friction ring (101a, 101b),
• providing (402) the brake pot (103),
• connecting (403) the collar (201, 202) by means of at least one connecting element (102) which is configured as a rivet to an edge of the brake pot (103), which edge is directed axially towards the friction ring (101a, 101b),
**characterized in that**
the connecting takes place in such a way that the rivet head (205) is subjected at its edge at least temporarily to a substantially perpendicularly acting force (206) which is greater than in its centre, with the result that the rivet head (205) which is guided through via a hole which is provided in the collar (201, 202) and in the edge is deformed in such a way that it bears flatly against the bent, curved and/or arcuate surface (203) of the brake pot (103), which surface (203) faces away from the collar.

7. Method according to Claim 6, **characterized in that** the connecting (403) takes place by way of a tool (202) with a rounded face, the rounded face being brought into contact with the rivet head.

8. Method according to Claim 6, **characterized in that** the brake pot (103) consists at least in part of light metal, in particular aluminium.

9. Method according to Claim 6, **characterized in that** the brake pot (103) consists at least in part of metal, in particular sheet metal.

10. Method according to Claim 6, **characterized in that** the friction ring (101a, 101b) consists of grey cast iron.

## Revendications

1. Disque de frein comprenant
• une bague de friction (101a, 101b) au moins partiellement en une première matière, et
• un pot de frein (103) au moins partiellement en une deuxième matière différente de la première matière,
• la bague de friction (101a, 101b) comportant un collet (201, 202) formé dans la direction axiale, et
• le collet (201, 202) étant relié à un bord du pot de frein (103) dirigé axialement vers la bague de friction (101a, 101b) au moyen d'au moins un élément de liaison (102) en forme de rivet,
**caractérisé en ce que**
• la tête de rivet (205) passée à travers un trou ménagé dans le collet (201, 202) et dans le bord est déformée de façon à venir en appui de manière sensiblement bidimensionnelle sur la surface courbe, incurvée et/ou en arc de cercle (203) du pot de frein (103) à l'opposé du collet.

2. Disque de frein selon la revendication 1, **caractérisé en ce que** le pot de frein (103) est au moins en partie en métal léger, notamment en aluminium.

3. Disque de frein selon la revendication 1, **caractérisé en ce que** le pot de frein (103) est au moins en partie en métal, notamment en tôle.

4. Disque de frein selon la revendication 1, **caractérisé en ce que** la bague de friction (101a, 101b) est en fonte grise.

5. Disque de frein selon la revendication 1, **caractérisé en ce que** le collet (201, 202) est en venue de matière avec la bague de friction (101a, 101b).

6. Procédé de fabrication d'un disque de frein comprenant
• une bague de friction (101a, 101b) au moins partiellement en une première matière et comportant un collet (201, 202) formé dans la direction axiale, et
• un pot de frein (103) au moins en partie en une deuxième matière différente de la première matière,
le procédé comprenant les étapes suivantes :
• fournir (401) l'au moins une bague de friction (101a, 101b),
• fournir (402) le pot de frein (103),
• relier (403) le collet (201, 202) à un bord du pot de frein (103) dirigé axialement vers la bague de friction (101a, 101b) au moyen d'au moins un élément de liaison (102) en forme de rivet,
**caractérisé en ce que**
la liaison est effectuée de telle sorte que la tête de rivet (205) soit au moins temporairement soumise au niveau du bord à une force (206) sensiblement perpendiculaire et plus grande et qu'au centre de façon à déformer la tête de rivet (205) traversé par un trou ménagé dans le collet (201, 202) et dans le bord de façon à venir en appui de manière sensiblement bidimensionnelle sur la surface courbe, incurvée et/ou en arc de cercle (203) du pot de frein (103) à l'opposé du collet.

7. Procédé selon la revendication 6, **caractérisé en ce que** la liaison (403) est effectuée au moyen d'un outil (202) à surface arrondie, la surface arrondie étant mise en contact avec la tête de rivet.

8. Procédé selon la revendication 6, **caractérisé en ce que** le pot de frein (103) est au moins partiellement en métal léger, notamment en aluminium.

9. Procédé selon la revendication 6, **caractérisé en ce que** le pot de frein (103) est au moins partiellement en métal, notamment en tôle.

10. Procédé selon la revendication 6, **caractérisé en ce que** la bague de friction (101a, 101b) est en fonte grise.
